# EUROPEAN PATENT APPLICATION

(11) **EP 4 668 207 A1**
(43) Date of publication of application: **24.12.2025**
(21) Application number: 24757004.7
(22) Date of filing: 18.02.2024
(51) Int. Cl.: G06T 7/00, G06V 10/82

(54) **IMAGE CLASSIFICATION SYSTEM AND PROGRAM**

(30) Priority: 19.02.2023 JP 2023023892
(71) Applicant: Kobe Material Testing Laboratory Co., Ltd., Hyogo 675-0155 (JP)
(72) Inventor: YAMAGIWA, Kenta, Kiyose-shi, Tokyo 204-0024 (JP)
(74) Representative: Kraus & Lederer PartGmbB
(86) International application number: PCT/JP2024/005638
(87) International publication number: WO 2024/172165

(57) **Abstract**

PROBLEM TO BE SOLVED: To provide an image classification system with which a region of attention, etc., of an image can be easily confirmed visually, and the validity of an estimation can be determined.

SOLUTION: An image classification system comprises a data receiving part which receives specimen image data, a data generating part which generates a plurality of section image data contained in said specimen image data as a partial image data and having smaller size than said specimen image data, a data estimation part which estimates, for each of the plurality of section image data, to which classification element each of the plurality of section image data is classified among a plurality of classification elements set in advance corresponding to a feature of the surface, by using a neural network trained in advance by teacher image data, and a display part that generates display information related to the section image data or the classification element, and superimpose and displays the generated display information on a specimen display image that is a display image of the specimen image data.

## Description

### [Technical field]

The present invention relates to an image classification system and a program.

### [Background of the invention]

For example, Patent Document 1 discloses a fracture surface analysis device which is to enable even a beginner of fracture surface analysis to determine the position of a fracture starting point from a fracture surface image. The fracture surface analysis device includes a machine learning unit that performs first learning using a first data set including a combination of fracture surface image data and fracture starting point data, and an estimation part that estimates a fracture starting point in an input fracture surface image based on a first learned model obtained by the first learning.

For example, Patent Document 2 discloses a fracture surface analysis device which is to enable even a beginner of fracture surface analysis to estimate a fracture starting point and a crack propagation direction from a fracture surface image without requiring a database of material information, fracture surface features, and the like. The fracture surface analysis device includes an image processing part that performs binarization processing on an image obtained by photographing the fracture surface, an image analysis part that extracts a plurality of straight lines from the binarized image by the image processing part, and a fracture surface analysis part that estimates a fracture starting point and a crack propagation direction in the fracture surface using a plurality of straight lines extracted by the image analysis part.

For example, Patent Document 3 discloses a fracture surface analysis device which is to enable even a non-expert to perform fracture surface analysis in the same manner as an expert. The apparatus includes a first means configured to calculate an accuracy of a fracture mode for a first observation image obtained from a micro region of an object to be analyzed by an imaging means, a second means which calculates an observation condition for improving the accuracy of the fracture mode, and a third means for adjusting an imaging condition of an imaging means of a micro region, and the apparatus includes a micro region observation part for outputting the observation condition for improving the accuracy of the fracture mode to a visualization means.

For example, Patent Document 4 discloses a fracture surface analysis device for the purpose of easily specifying the cause of fracture of a resin molded body from a fracture surface image of the resin molded body. The fracture surface analysis device includes an acquisition part for acquiring a target fracture surface image obtained by imaging a fracture surface of a resin molded body to be analyzed, and an analysis part for specifying a fracture cause of the resin molded body by inputting the target fracture surface image to a learned model which is generated by machine learning using the fracture surface image and labels of fracture causes as teacher data.

### [Prior art reference]

### [Patent document]

Patent document 1; JP 2021-157607A
Patent document 2; JP 2021-156879A
Patent document 3; JP 2021-12570A
Patent document 4; JP 2020-87570A

### [Summary of the invention]

### [Problem to be solved by the invention]

According to the fracture surface analysis devices described above and the like, estimation of a fracture mode, a fracture starting point etc. may be analyzed by using, for example, a trained neural network. Although, in the trained neural network, attention is mainly paid to the level of the correct answer rate of the estimation result, an intermediate result in the estimation calculation is generally not considered. For example, when the fracture mode is estimated from the fracture surface image, only the estimation result is shown to the user. It is not shown which region of the fracture surface image is focused on to estimate the fracture mode.

An object of the present invention is to provide an image classification system with which a region of attention, etc., of an image can be easily confirmed visually, and the validity of an estimation can be determined, even in a case where a trained neural network is used to classify an image based on a feature of a specimen surface such as a fracture surface and the image classification system is applied to estimation of a fracture mode etc..

### [Means for solving the problem]

In order to solve the aforementioned problem, in the first aspect of the present invention, an image classification system is provided which comprises a data receiving part which receives specimen image data in which whole or a part of a specimen surface is imaged, a data generating part which generates a plurality of section image data contained in said specimen image data as a partial image data and having smaller size than said specimen image data, a data estimation part which estimates, for each of the plurality of section image data, to which classification element each of the plurality of section image data is classified among a plurality of classification elements set in advance corresponding to a feature of the surface, by using a neural network trained in advance by teacher image data, and a display part that generates display information related to the section image data or the classification element, and superimposes and displays the generated display information on a specimen display image that is a display image of the specimen image data. The learning of the above-described neural network may be deep learning.

The display part may generate, as a display information, for each of the section image data, a section image frame indicating a display position of the section image data in the specimen display image, and the display part may display the classification element for each of the section image data and may superimpose and display a section image frame for each of the section image data on the specimen display image.

In the above-described case in which the section image frame is generated as display information, the specimen may be a metal specimen, and the specimen image data may be image data obtained by imaging the fracture surface of the metal specimen. In that case, the plurality of classification elements may be a plurality of fracture modes determined in advance as fracture factors that may be generation factors of the fracture surface. And the data estimation part may calculate, for each piece of the section image data, a probability of classification to each of the plurality of fracture modes, as a classification element to which said section image data is classified. And the display part may display, as the estimated classification element, the fracture mode to which the highest probability is calculated for each of the section image data.

In the above case, the display part may further display the probability of each of the fracture modes calculated for each piece of the classified section image data. In addition, the data estimation part may generate heat map image data indicating which part of the section image data is focused on by the model of the neural network, and the display part may further display the heat map image for each section image data. Further, the data estimation part may generate statistical data of pixel values contained in the section image data, and the display part may display the statistical data for each section image data.

In addition, the display part may generate, as the display information, a classification image region which is a display region of a group of section image data in the specimen display image in which the classification elements are same, for each classification element, and the display part may display the classification image region for each classification element in a superimposed manner on the specimen display image.

In this case, the specimen may be a metal specimen, and the specimen image data may be an image data obtained by capturing an image of a fracture surface of the metal specimen. In this case, the display part may specify, among the classification image regions for each of the classification elements, a classification image region which is estimated to include a starting point of fracture that generates the fracture surface, and onto the specified classification image region, notification treatment may be applied for indicating that the region is estimated to include the starting point.

According to a second aspect of the present invention, a computer program is provided for causing a computer to implement a data receiving function for receiving specimen image data in which whole or a part of a specimen surface is imaged, a data generating function for generating a plurality of section image data contained in said specimen image data as a partial image data and having smaller size than said specimen image data, a data inference function for inferring, for each of the plurality of section image data, to which classification element each of the plurality of section image data is classified among a plurality of classification elements set in advance corresponding to a feature of the surface, by using a neural network trained in advance by teacher image data, and a display function for generating display information related to the section image data or the classification element, and for superimposing and displaying the generated display information on a specimen display image that is a display image of the specimen image data.

It should be noted that the above summary of the invention does not list all of the necessary features of the present invention. In addition, a sub-combination of these feature groups can also be the invention.

### [Brief Description of the Drawings]

[FIG. 1] FIG. 1 is a conceptual block diagram illustrating an outline of an image classification system 100.
[FIG. 2] FIG. 2 is a diagram illustrating an example of a display of an image classification system.
[FIG. 3] FIG. 3 is a diagram showing another example of a display of the image classification system 100.
[FIG. 4] FIG. 4 is a diagram showing a display example when the image classification system is applied to estimation of a fracture start point.

### [Mode for carrying out the invention]

Hereinafter, the present invention will be described through embodiments of the invention, but the following embodiments do not limit the invention according to the claims. In addition, combination of all of the features described in the embodiments is not necessarily essential to the solution of the invention.

### (First Embodiment)

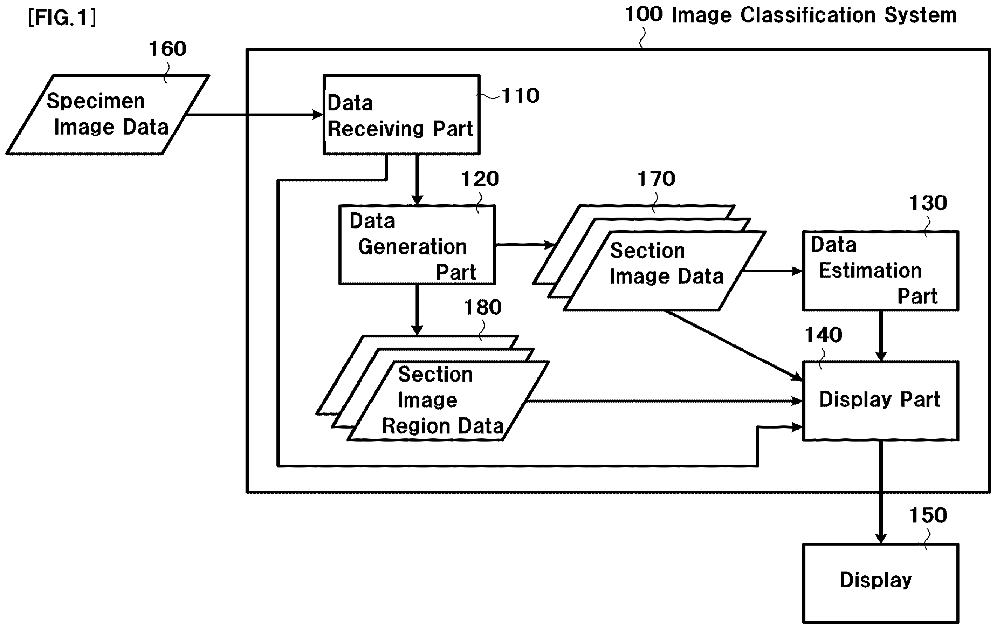

FIG. 1 is a conceptual block diagram illustrating an overview of an image classification system 100. The image classification system 100 is configured by a general computer system and software, and may be configured, for example, by installing necessary software in a server system that provides a service in response to a request from a client system. Alternatively, necessary software may be installed in a stand-alone system such as a general personal computer. Alternatively, necessary software may be installed in a control computer of an image acquisition device such as an electron microscope or a stereoscopic microscope. When configuring in a client server system, the communication between the client system and the server system may be performed via the Internet.

The image classification system 100 includes a data receiving part 110, a data generation part 120, a data estimation part 130, and a display part 140.

The data receiving part 110 receives the specimen image data 160 obtained by imaging the whole or a part of the specimen surface. The specimen is an object having a surface to be classified by the image classification system 100. Examples of the specimen include structures of metal, plastic, ceramic, glass, etc..

The specimen image data 160 is an image data obtained by imaging the specimen surface, and is configured in a known image format such as JPG or BMP. The specimen image data 160 may be obtained by imaging the entire specimen surface, or may be obtained by imaging a part of the specimen surface. In a case where a characteristic part of the specimen surface is selected and imaged as the specimen image data 160, the accuracy of classification can be improved, which is preferable.

The specimen image data 160 may be data of a still image obtained by directly photographing the specimen surface with a photographic camera or a digital camera for example. Examples include frame image data of a moving image captured in a moving image mode of a video camera or a digital camera, and, output image data of an electron microscope, data of an image captured by a camera attached to a stereoscopic microscope, etc. The specimen image data 160 does not need to be data obtained by directly imaging the specimen surface, and may be data of an image obtained by copying an image printed on a paper medium such as a book or a report.

The specimen image data 160 received by the data receiving part 110 is entered to the data generating unit 120.

The data generation part 120 generates a plurality of section image data 170. By generating a plurality of section image data 170, it is possible to obtain a plurality of estimation results for one specimen surface which is a classification object, and it is possible to increase the accuracy of classification.

The section image data 170 is a part of the image data included in the specimen image data 160, and is smaller in size than the specimen image data 160. In other words, it can be said that the section image data 170 is an image data obtained by cutting out a partial small region of the specimen surface to be classified.

The data generation part 120 generates the section image data 170 and generates the section image area data 180 indicating the display area of the section image data 170. The section image region data 180 is transmitted to the display part 140, and is used to generate display information related to the section image data 170.

The data estimation part 130 specifies said section image data 170 to be classified to which classification element among the plurality of classification elements. The classification element is set in advance in association with the feature of the specimen surface. For example, in a case where the specimen surface is a fracture surface, since the feature of the specimen surface (fracture surface) is different depending on the fracture mode, the feature and the fracture mode may be associated with each other, and the fracture mode may be set as the classification element.

In addition, the data estimation part 130 estimates to which classification element the section image data 170 is classified by using a neural network that has been trained in advance by the teacher image data. As the trained neural network, for example, a CNN, an RNN, a transformer, or the like can be employed. The learning of the neural network may be deep learning.

The display part 140 generates display information related to the section image data 170 or the classification element, and superimposes and displays the generated display information on a specimen display image which is a display image of the specimen image data 160.

In the first embodiment, an example is described. In that example, the display part 140 generates, as a display information for each section image data 170, a section image frame indicating a display position of a section image data 170 in the specimen display image of the section image data 170. In this example to be described, the display part 140 displays the classification element for each of the section image data 170 on the display 150 and superimposes the section image frame for each of the section image data 170 on the specimen display image to display the section image frame on the display 150.

By superimposing and displaying the section image frame for each section image data 170 on the specimen display image which is the display image of the specimen image data 160, it is possible to visually determine whether or not the section image data 170 corresponds to an appropriate specimen surface position (region). In a case where the section image data 170 corresponds to an apparently inappropriate specimen surface region, it is possible to comprehensively determine the classification of the specimen surface by ignoring the classification of the section image data 170.

In the above-described embodiment, when the specimen is a metal specimen, the specimen image data 160 can be an image data obtained by imaging a fracture surface of the metal specimen. In this case, as the plurality of classification elements, a plurality of predetermined fracture modes can be employed among fracture factors that can be generation factors of the fracture surface.

In this case, the data estimation part 130 can calculate, for each section image data 170, the probability that the section image data 170 is classified for each fracture mode, and the part 130 can estimate that the fracture mode having the highest probability is the fracture mode (classification element) of the section image data 170. Then, the display part 140 can display, as the estimated classification element, the fracture mode for which the highest probability is calculated for each piece of the section image data 170.

The display part 140 can further display the probability of each fracture mode calculated for each piece of the section image data 170. By displaying the probability for each fracture mode, it is possible to estimate the probability certainty of estimation, or conversely, the uncertainty of estimation.

In addition, the data estimation part 130 can generate heat map image data indicating which part of the section image data 170 is focused on paid attention to by the model of the neural network. In this case, the display part 140 can further display a heat map image for each section image data 170. By displaying the heat map, it is possible to recognize which part of the image has been focused on, and it is possible to estimate the certainty of the estimation or the uncertainty of the estimation in the same manner as described above.

In addition, the data estimation part 130 can generate statistical data of the pixel values included in the section image data 170, and in this case, the display part 140 can further display the statistical data for each section image data 170. For example, as statistical data, the display part may display mean (Mean), variance (Var), skewness (Skew), kurtosis (Kurt), and a parameter indicating the degree of focus (Blur) etc. By displaying the statistical data, it is possible to check whether the data to be calculated by the data estimation part 130 is appropriate.

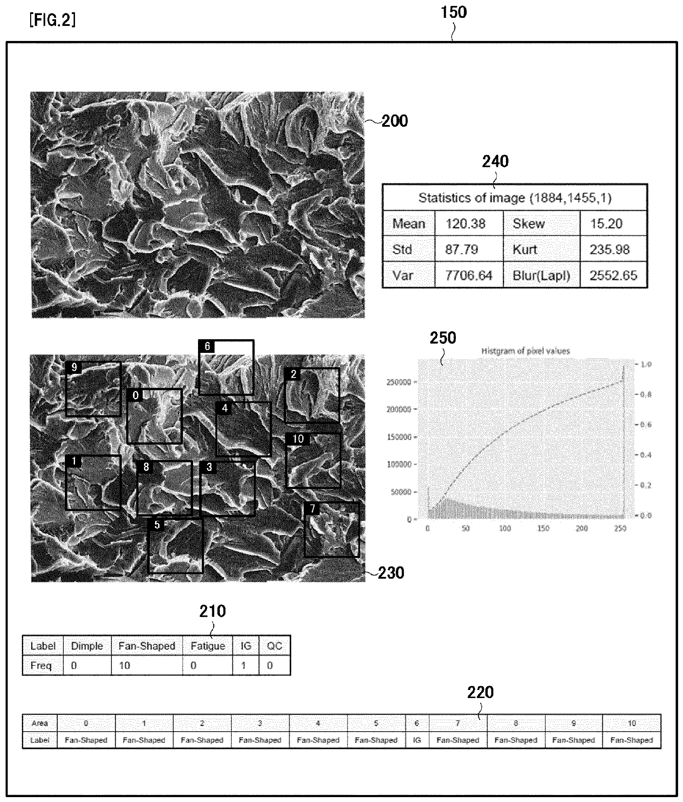

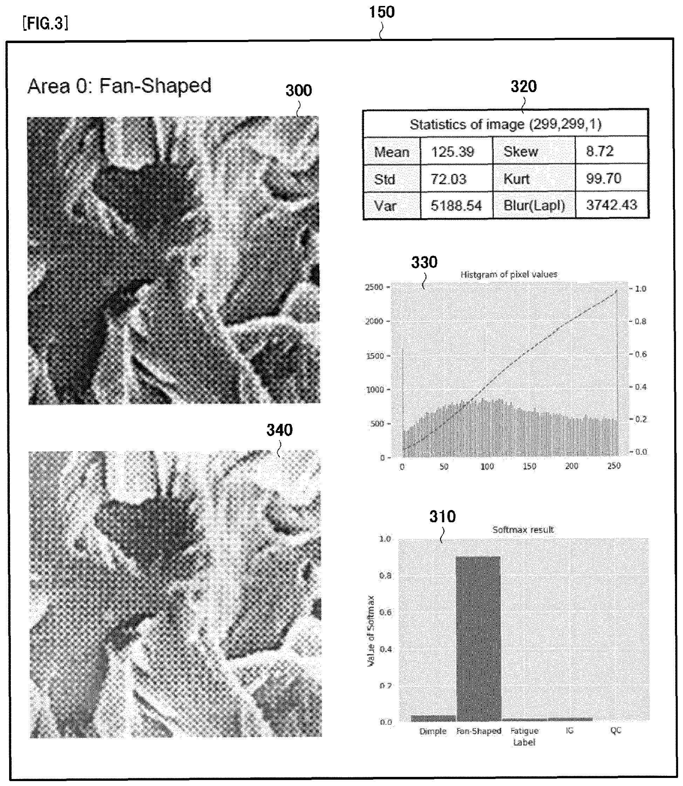

FIG. 2 is a diagram showing an example of the display of the image classification system 100, and FIG. 3 is a diagram showing another example of the display of the image classification system 100. In the display on the display 150 in FIG.s 2 and 3, the specimen is a metal specimen, and the image of the metal specimen is displayed as the specimen image data 160.A case where a cross-section is imaged is shown. Since the fracture surface of the metal specimen is applied as the estimation target object of the data estimation part 130, the fracture mode is employed as the classification element associated with the feature of the fracture surface, and as fracture modes (classification labels), "Dimple", "Fan-Shaped", "Fatigue", " IG ( Intergranular fracture ) ", and "QC ( Quasi-cleavage fracture )" are set.

On the display 150 in FIG. 2, there are displayed a specimen display image 200 which is a display image of the specimen image data 160, a table 210 showing a result of classification estimation of the specimen display image 200, and a table 220 showing a result of classification estimation for each section image data 170. Also, on the display 150 in FIG. 2, an image 230 in which section image frames 0 to 10 (indicated by black line frames numbered in the frames) indicating display positions of the section image data 170 in the specimen display image 200, are superimposed and displayed on the specimen display image 200 as display information. And, statistical data 240 and a histogram 250 of pixel values included in the specimen display image 200 are displayed.

By superimposing and displaying the section image frame indicating the display position of the section image data 170 on the specimen display image 200, it is possible to visually determine whether the section image data 170 corresponding to each section image frame is appropriate data for estimating the classification or not. For example, in FIG. 2, the image surrounded by the section image frame 6 is an inappropriate image in which a blank occupies a large area, and referring to the classification result 220 for each section image frame, the fracture mode (Label) estimated in the section image data 170 of the section image frame 6 indicates "IG" different from that of the other section image frames. Therefore, it can be easily visually determined that the estimation result of the section image frame 6 is unreliable. On the other hand, in the section image frames 0 to 5 and 7 to 10 other than the section image frame 6, an appropriate image region is selected, and the estimation results of the fracture mode (Label) are all "Fan-Shaped" and coincide with each other. Accordingly, it can be easily determined by visual observation that the result in which the fracture mode of the specimen display image 200 is estimated as "Fan-Shaped" may be trusted. In FIG. 2, by displaying the statistical data 240 and the histogram 250 of the pixel values of the specimen image data 160 (the specimen image data display image 200), it is possible to easily determine whether the data to be estimated is appropriate or not.

In the display 150 in FIG. 3, there are displayed a display image 300 of the section image frame 0 which is one of the section image data 170, and a graph 310 indicating the probability that the image data in the section image frame 0 is estimated in each fracture mode (label) of "Dimple", "Fan-Shaped", "Fatigue", "IG", and "QC". Also, there are displayed statistical data 320 and a histogram 330 of pixel values included in the image data of the section image frame 0, and a heat map image 340 indicating which part of the image of the section image frame 0 is focused on by the neural network model. In the heat map picture 340, warm color (red) shows a trend with a high attention degree, and cold color (blue) shows the low trend.

By displaying the graph 310, it can be seen that the probability that the fracture mode of the section image data 170 in the section image frame 0 is estimated as "Fan-Shaped" is overwhelmingly higher than in other cases, and it is possible to have confidence that the estimation result is correct. In addition, by displaying the heat map image 340, it is possible to visually check a portion to which the neural network model pays attention, and it is possible to determine that the estimation result is valid in a case where a characteristic portion of the image and the attention portion match each other. On the other hand, when the feature portion of the image and the attention portion do not match each other, the estimation result is doubtful, and an opportunity to reconsider the estimation result can be obtained. In addition, by displaying the statistical data 320 and the histogram 330 of the pixel values, it is possible to easily determine whether the image data corresponding to the section image frame 0 to be estimated is appropriate or not.

In the description of FIG. 3, an example of section image frame 0 is shown, but the same applies to the other section image frames 1 to 10.

As described above, according to the image classification system 100, whether the image data of each section image frame (section image data 170) is appropriately extracted from the specimen image data 160 as the classification object or not can be easily determined from the position of the section image frame superimposed and displayed on the specimen display image 200. Whether the classification estimation in the section image frame is appropriate or not can be easily determined by the display of the estimated probability for each fracture mode (classification element) and the heat map image. Further, it is possible to easily determine whether the data of the estimation target object image is appropriate or not by the statistical data or the histogram of the pixel values of the estimation target image.

### (Second Embodiment)

The image classification system according to the second embodiment is the same as the image classification system 100 according to the first embodiment except for the display part 140. Therefore, the description of the configuration other than the display part 140 is omitted.

The display part 140 according to the second embodiment generates, as the display information, a classification image region, which is a display region in the specimen display image of a group of section image data 170 having the same classification element, for each classification element, and superimposes and displays the classification image region for each classification element on the specimen display image. Hereinafter, a case in which the specimen is a metal specimen and the specimen image data is image data obtained by imaging a fracture surface of the metal specimen will be described.

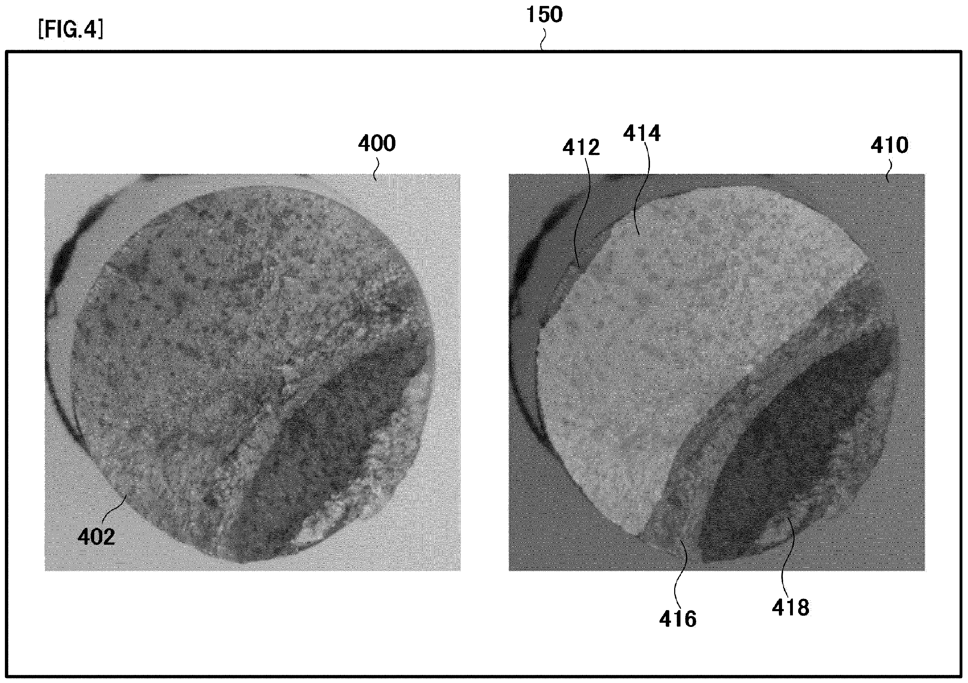

FIG. 4 shows a display example when the image classification system is applied to the estimation of the fracture starting point origin. The display 150 in FIG. 4 displays a specimen display image 400, which is a display image of the specimen image data 160, and an image 410 in which the classified image region 412, 414, 416 and 418 as display information is superimposed and displayed on the specimen display image 400.

A fracture plane 402 is displayed in the specimen display image 400. And by four classified elements depending on the features of the fracture plane 402, four regions (classified image regions 412, 414, 416, 418) are generated.

That is, as the four classification elements, a starting point portion, a crack propagation portion (no beach mark), a crack extension part (with a beach mark) and a final fracture part are set. The neural network of a data estimation part 130 learns the four classification elements. And a classification element of each section image data 170 is estimated by the data estimation part 130 using the learned neural network. As a result of the estimation, a group of the section image data 170 having the same classification element is formed, and an image region displayed by the group of the section image data 170 is specified as a classified image region.

Among the image regions specified as described above, the image region in which the starting point part is estimated as the classification element is the classification image region 412, and the image region in which the crack extension part (no beach mark) is estimated as the classification element is the classification image region 414. And, the image region in which the crack propagation part (with the beach mark) is estimated as the classification element is the classification image region 416, and the image region in which the final fracture part is estimated as the classification element is the classification image region 418.

By displaying the classification image regions 412 to 418 so as to be superimposed on the specimen display image 400, it is possible to visually confirm whether the fracture starting point at which the cross section 402 is generated is appropriately estimated.

In the above example, since the starting point portion is set in one of the classification elements, the classification image region including the starting point portion is clear. However, the starting point portion may not be set in the classification element in the learning stage of the neural network, and the classification image region including the starting point portion may be estimated and specified by another method. For example, among the plurality of classified image regions, the classified image region having the minimum area may be estimated as the classified image region including the starting point portion, or the development direction of the fracture may be predicted from the shapes of the plurality of classified image regions, and then the classified image region at the original position of the development may be estimated as the classified image region including the starting point portion. In this case, it is possible to perform notification processing that the starting point is estimated to be included in the specified classified image region. As a method of notification, for example, a method of highlighting or blinking the classification image region can be exemplified.

Further, in the above-described example, the case where the number of classification elements is four has been described, but the present invention is not limited thereto, and the number of classification elements may be plural, that is, two or more. However, when the image classification system according to the second embodiment is applied to the estimation of the fracture starting point origin, if the number of classification elements is too large, the number of corresponding classification image regions also increases, and it is difficult to accurately specify the range of the classification image region, which may cause a problem in the estimation of the fracture origin. Therefore, the number of classification elements is preferably 2 to 15, and more preferably 2 to 7.

As described above, according to the present invention, even in a case where estimation of an image classification based on a feature of a specimen surface is performed using a trained neural network, it is possible to easily visually recognize validity of a region of attention of an image and validity of data, and to determine validity of the estimation.

Although the present invention has been described using the embodiment, the technical scope of the present invention is not limited to the scope described in the above embodiment. For example, in the above-described embodiment, the present invention has been described as a system, but it is also possible to grasp the elements of the system constituting the present invention as functions realized by a program and recognize the present invention as a program.

Further, it is apparent to those skilled in the art that various modifications or improvements can be added to the above-described embodiment. It is apparent from the description of the appended claims that embodiments to which such modifications or improvements are added can also be included in the technical scope of the present invention. For example, in the above-described embodiment, an example in which the estimation result or the like is displayed on the display 150 by the display part 140 has been described. However, the estimation result or the like may be output as an electronic file in a PDF format or the like, or may be displayed by printing on a paper medium.

As for an execution order of processes such as operations, procedures, steps, and stages in an apparatus, a system (a program), and a method illustrated in the claims, the specification, and the drawings, it should be noted that the processing can be realized in any order as long as it is not explicitly described as "before", "prior", or the like, and as long as the output of the previous processing is not used in the subsequent processing. Even if the operation flows in the claims, the specification, and the drawings are described using "first", "next", and the like for convenience, it does not mean that it is essential to perform the operations in this order.

### [Explanation of letters or numerals]

100···image classification system, 110···data receiving part, 120···data generation part, 130···data estimation part, 140··· display part, 150··· display, 160··· specimen image data, 170···section image data, 180···section image region data.

## Claims

1. An image classification system comprising
a data receiving part which receives specimen image data in which whole or a part of a specimen surface is imaged,
a data generating part which generates a plurality of section image data contained in said specimen image data as a partial image data and having smaller size than said specimen image data,
a data estimation part which estimates, for each of the plurality of section image data, to which classification element each of the plurality of section image data is classified among a plurality of classification elements set in advance corresponding to a feature of the surface, by using a neural network trained in advance by teacher image data,
and a display part that generates display information related to the section image data or the classification element, and superimpose and displays the generated display information on a specimen display image that is a display image of the specimen image data.

2. The image classification system according to claim 1, wherein,
the display part generates, as a display information, for each of the section image data, a section image frame indicating a display position of the section image data in the specimen display image,
and display the classification element, and
the display part displays the classification element for each of the section image data and superimposes and displays a section image frame for each of the section image data on the specimen display image.

3. A surface condition classification system according to claim 2, wherein,
the specimen is a metal specimen,
the specimen image data is an image data obtained by imaging a fracture surface of the metal specimen,
the plurality of classification elements are a plurality of fracture modes determined in advance as fracture factors that may be generation factors of the fracture surface,
the data estimation part calculates, for each section image data, a probability of classification to each of the plurality of fracture modes, and estimates the fracture mode to which a highest probability is calculated as a classification element to which the section image data is classified,
and the display part displays, as an estimated classification element, a fracture mode to which the highest probability is calculated for each of the section image data.

4. The surface condition classification system according to claim 3,
the display part further displays the probability for each fracture mode calculated for each section image data.

5. The surface condition classification system according to claim 4,
the data estimation part generates a heat map image data indicating to which part of the section image data model of the neural network is focused on,
and the display part further displays the heat map image for each section image data.

6. The surface condition classification system according to claim 4 wherein,
the data estimation part generates statistical data of pixel values contained in the section image data, and
the display part displays the statistical data for each section image data.

7. The image classification system according to claim 1 wherein,
the display part generates, as the display information, a classification image region which is a display region of a group of section image data in the specimen display image in which the classification elements are same, for each classification element,
and the display part displays the classification image region for each classification element in a superimposed manner on the specimen display image.

8. The surface condition classification system according to claim 7,
the specimen is a metal specimen, and
the specimen image data is an image data obtained by capturing an image of a fracture surface of the metal specimen,
the display part specifies, among the classification image regions for each of the classification elements, a classification image region which is estimated to include a starting point of fracture that generates the fracture surface, and onto the specified classification image region, notification treatment is applied for indicating that the region is estimated to include the starting point.

9. A program for causing a computer to implement
a data receiving function for receiving specimen image data in which whole or a part of a specimen surface is imaged,
a data generating function for generating a plurality of section image data contained in said specimen image data as a partial image data and having smaller size than said specimen image data,
a data estimation function for estimating, for each of the plurality of section image data, to which classification element each of the plurality of section image data is classified among a plurality of classification elements set in advance corresponding to a feature of the surface, by using a neural network trained in advance by teacher image data,
and a display function for generating display information related to the section image data or the classification element, and for superimposing and displaying the generated display information on a specimen display image that is a display image of the specimen image data.
